# EUROPÄISCHE PATENTSCHRIFT

(11) **EP 3 945 767 B1**
(45) Veröffentlichungstag und Bekanntmachung des Hinweises auf die Patenterteilung: **10.12.2025**
(21) Anmeldenummer: 20704250.8
(22) Anmeldetag: 06.02.2020
(51) Int. Cl.: A01C 7/08

(54) **VERTEILEINRICHTUNG FÜR KÖRNIGES MATERIAL**
DISTRIBUTION DEVICE FOR GRANULAR MATERIAL
DISPOSITIF DE DISTRIBUTION POUR MATIÈRE GRANULÉE

(30) Priorität: 26.03.2019 DE 102019107642
(43) Veröffentlichungstag der Anmeldung: 09.02.2022
(73) Patentinhaber: Amazonen-Werke H. Dreyer SE & Co. KG, 49205 Hasbergen (DE)
(72) Erfinder: LUEBBEN, Jan-Eike, 26188 Edewecht (DE); WIEN, Thomas, 28816 Stuhr (DE); FLUCKE, Jan, 27798 Hude (DE)
(86) Internationale Anmeldenummer: PCT/EP2020/052935
(87) Internationale Veröffentlichungsnummer: WO 2020/192990

(56) Entgegenhaltungen:
- WO-A1-2011/003078
- US-A1- 2006 042 529
- US-A1- 2014 193 211

## Beschreibung

Die Erfindung betrifft eine Verteileinrichtung für körniges Material nach dem Oberbegriff des Patentanspruchs 1 und eine Sämaschine nach dem Oberbegriff des Patentanspruchs 11.

Sämaschinen zum Ausbringen von Saatgut auf eine landwirtschaftliche Nutzfläche weisen üblicherweise einen Vorratsbehälter für das Saatgut auf, wobei der Vorratsbehälter mit einer Verteileinrichtung verbunden ist. Über die Verteileinrichtung und gegebenenfalls zwischengestaltete Versorgungsaggregate wird das Saatgut mehreren Kornvereinzelungseinrichtungen der Sämaschine bereitgestellt, wobei die durch die Kornvereinzelungseinrichtungen vereinzelten Saatkörner dann über mehrere Säschare auf der landwirtschaftlichen Nutzfläche abgelegt werden.

Gattungsgemäße Verteileinrichtungen weisen üblicherweise ein Verteilergehäuse auf, wobei das Verteilergehäuse eine Materialeinlassöffnung für das zu verteilende Saatgut aufweist. Das Saatgut wird innerhalb des Verteilergehäuses einem Kornaufnahmebereich zugeleitet, innerhalb welchem das über die Materialeinlassöffnung in das Verteilergehäuse eintretende Saatgut in mehrere Förderluftströmungen eingebracht wird. Die mit dem Saatgut beladenen Förderluftströmungen werden dann über mehrere Materialströmungsleitungen aus dem Verteilergehäuse der Verteileinrichtung herausgeleitet, sodass die mit dem Saatgut beladenen Förderluftströmungen jeweils einen Zwischenaggregat oder direkt einer Vereinzelungseinrichtung der Sämaschine bereitgestellt werden können. Verteileinrichtungen nach dem Oberbegriff des Anspruchs 1 sind aus den WO 2011/003078 A1 und US 2006/042529 A1 bekannt.

Die im Stand der Technik bekannten Verteileinrichtungen erlauben lediglich eine äußerst eingeschränkte Steuerung der die Verteileinrichtung verlassenden Saatgutströme. Bisher werden zur Anpassung der die Verteileinrichtung verlassenden Saatgutströme die Förderluftströmungen angepasst. Dies erfolgt beispielsweise über eine Steuerung der Leistungsversorgung einer Gebläseeinheit, welche für die Erzeugung der Förderluftströmungen zuständig ist.

In der Praxis hat sich gezeigt, dass bei derartigen Systemen ein erhöhtes Risiko der Saatgutablagerung innerhalb der Verteileinrichtung besteht. In speziellen Aussaatsituationen kann dies sogar zum Verstopfen einzelner Kanal- oder Leitungsbereiche innerhalb des Verteilergehäuses führen. Entsprechende Saatgutablagerungen führen somit zu einer mangelhaften Saatgutversorgung, wodurch das Säergebnis erheblich beeinträchtigt werden kann. Insbesondere können sich Fehlstellen oder sogar unterbrochene Saatreihen auf der landwirtschaftlichen Nutzfläche ergeben.

Die der Erfindung zugrundeliegende Aufgabe besteht somit darin, Materialablagerungen in den Leitungen und Kanälen der Verteileinrichtung zu vermeiden und gleichzeitig eine präzise Steuerung der die Verteileinrichtung verlassenden Materialströme zu ermöglichen.

Die Aufgabe wird durch eine Verteileinrichtung mit den Merkmalen des Anspruchs 1 gelöst.

Die Erfindung macht sich die Erkenntnis zunutze, dass mittels der Zusatzluftströmung die eine oder die mehreren Materialströmungsleitungen mit zusätzlicher Luft versorgt werden können, wodurch die Strömungsgeschwindigkeit innerhalb der einen oder der mehreren Materialströmungsleitungen erhöht und das körnige Material innerhalb der einen oder der mehreren Materialströmungsleitungen beschleunigt wird. Auf diese Weise wird eine Ablagerung des körnigen Materials oder sogar ein Verstopfen der einen oder der mehreren Materialströmungsleitungen vermieden. Mittels der Zusatzluftströmung kann die eine oder können die mehreren Materialströmungsleitungen außerdem frei von Rückständen gehalten werden, welche an dem körnigen Material anhaften.

Der Zusatzluftkanal der erfindungsgemäßen Verteileinrichtung ist separat zu dem Förderluftkanal ausgebildet, sodass die materialfreie Zusatzluftströmung und die materialfreie Förderluftströmung separate Luftströmungen darstellen. Die Verteileinrichtung fungiert vorzugsweise als Verteilerschleuse zwischen einem Vorratsbehälter für das körnige Material und mehreren Kornvereinzelungseinrichtungen für das körnige Material, wobei die Kornvereinzelungseinrichtungen vereinzelte Körner des körnigen Materials nachgeschalteten Säscharen zur Verfügung stellen, über welche die einzelnen Körner dann auf der landwirtschaftlichen Nutzfläche abgelegt werden.

In einer bevorzugten Ausführungsform der erfindungsgemäßen Verteileinrichtung weist das Verteilergehäuse zumindest eine Hauptlufteinlassöffnung auf, über welche eine Luftströmung in das Verteilergehäuse einleitbar ist, wobei innerhalb des Verteilergehäuses vorzugsweise eine Strömungsteilungseinrichtung angeordnet ist, welche dazu eingerichtet ist, die in das Verteilergehäuse eingeleitete Luftströmung in die Förderluftströmung und die Zusatzluftströmung aufzuteilen. Die Förderluftströmung und die Zusatzluftströmung können somit über das gleiche Gebläse erzeugt werden. Aufgrund der Aufteilung der in das Verteilergehäuse eingeleiteten Luftströmung in die Förderluftströmung und die Zusatzluftströmung wirkt sich eine Anpassung der in das Verteilergehäuse eingeleiteten Luftströmung, beispielsweise durch ein Verändern der dem Gebläse bereitgestellten Leistung, sowohl auf die Förderluftströmung als auch auf die Zusatzluftströmung aus. Die Volumenströme der Förderluftströmung und der Zusatzluftströmung sind außerdem abhängig vom Strömungswiderstand entlang des Strömungspfads der Förderluftströmung und entlang des Strömungspfads der Zusatzluftströmung. Wenn es beispielsweise zu einer Häufung von körnigem Material im Kornaufnahmebereich kommt, erhöht sich der Strömungswiderstand entlang des Strömungspfads der Förderluftströmung. Aufgrund des erhöhten Strömungswiderstands kommt es zu einer Erhöhung des Volumenstroms der Zusatzluftströmung. Ferner führt ein erhöhter Strömungswiderstand innerhalb des zumindest einen Zusatzluftkanals zu einer Steigerung des Volumenstroms der Förderluftströmung. Zur Vergleichmäßigung der Strömungsverhältnisse kann es zweckmäßig sein, mehr als eine Hauptlufteinlassöffnung, beispielsweise an beiden Seiten des Verteilergehäuses, vorzusehen.

In einer Weiterbildung der erfindungsgemäßen Verteileinrichtung ist in dem zumindest einen Förderluftkanal eine Durchflusssteuereinrichtung angeordnet, mittels welcher die Förderluftströmung einstellbar ist. Mittels der Durchflusssteuereinrichtung in dem zumindest einen Förderluftkanal lässt sich die Förderluftströmung unabhängig von der Zusatzluftströmung einstellen. Mittels der Durchflusssteuereinrichtung in dem zumindest einen Förderluftkanal ist beispielsweise der freie Strömungsquerschnitt in einem Bereich des zumindest einen Förderluftkanals veränderbar. Auf diese Weise kann der Strömungswiderstand entlang des Strömungspfads der Förderluftströmung verändert werden. Die Durchflusssteuereinrichtung in dem zumindest einen Förderluftkanal kann einen Klappenmechanismus umfassen, welcher eine oder mehrere schwenkbare Luftdosierklappen aufweist. Durch eine Änderung der Drehwinkelstellung der einen oder der mehreren Luftdosierklappen kann die Förderluftströmung eingestellt werden. Die eine oder die mehreren Luftdosierklappen können mit einer Klappen-Welle verbunden sein, wobei die Drehwinkelstellung der einen oder der mehreren Luftdosierklappen durch Drehen der Klappen-Welle einstellbar ist. Alternativ oder zusätzlich kann die Durchflusssteuereinrichtung in dem zumindest einen Förderluftkanal einen Schiebermechanismus umfassen, welcher einen oder mehrere stufenlos oder schrittweise verschiebbare Luftdosierschieber aufweist. Durch eine Änderung der Position des einen oder der mehreren Luftdosierschieber können Strömungsschlitze teilweise oder vollständig abgedeckt bzw. verdeckt werden, sodass hierdurch die Förderluftströmung eingestellt werden kann.

Erfindungsgemäß ist in dem zumindest einen Zusatzluftkanal und/oder an dem zumindest einen Zusatzlufteinlass eine Durchflusssteuereinrichtung angeordnet, mittels welcher die Zusatzluftströmung einstellbar ist. Mittels der Durchflusssteuereinrichtung in dem zumindest einen Zusatzluftkanal und/oder an dem zumindest einen Zusatzlufteinlass lässt sich die Zusatzluftströmung unabhängig von der Förderluftströmung einstellen. Mittels der Durchflusssteuereinrichtung in dem zumindest einen Zusatzluftkanal und/oder an dem zumindest einen Zusatzlufteinlass ist beispielsweise der freie Strömungsquerschnitt in einem Bereich des zumindest einen Zusatzluftkanals und/oder an dem zumindest einen Zusatzlufteinlass veränderbar. Auf diese Weise kann der Strömungswiderstand entlang des Strömungspfads der Zusatzluftströmung verändert werden. Die Durchflusssteuereinrichtung in dem zumindest einen Zusatzluftkanal und/oder an dem zumindest einen Zusatzlufteinlass kann einen Schiebermechanismus umfassen, welcher einen oder mehrere stufenlos oder schrittweise verschiebbare Luftdosierschieber aufweist. Durch eine Änderung der Position des einen oder der mehreren Luftdosierschieber können Strömungsschlitze teilweise oder vollständig abgedeckt bzw. verdeckt werden, sodass hierdurch die Zusatzluftströmung eingestellt werden kann. Alternativ oder zusätzlich kann die Durchflusssteuereinrichtung in dem zumindest einen Zusatzluftkanal und/oder an dem zumindest einen Zusatzlufteinlass einen Klappenmechanismus umfassen, welcher eine oder mehrere schwenkbare Luftdosierklappen aufweist. Durch eine Änderung der Drehwinkelstellung der einen oder der mehreren Luftdosierklappen kann die Zusatzluftströmung eingestellt werden. Die eine oder die mehreren Luftdosierklappen können mit einer Klappen-Welle verbunden sein, wobei die Drehwinkelstellung der einen oder der mehreren Luftdosierklappen durch Drehen der Klappen-Welle einstellbar ist.

Wenn in dem zumindest einen Förderluftkanal und in dem zumindest einen Zusatzluftkanal und/oder an dem zumindest einen Zusatzlufteinlass jeweils eine Durchflusssteuereinrichtung angeordnet ist, kann beispielsweise nur einer der Kanäle freigegeben sein. Alternativ können beide Kanäle freigegeben sein, sodass sich die Strömungen gegenseitig unterstützen. Dadurch, dass die Förderluftströmung und die Zusatzluftströmung durch die gemeinsame Lufteinlassöffnung und/oder über den zumindest einen Zusatzlufteinlass in Wechselwirkung zueinander stehen, kann die Förderluftströmung in dem Förderluftkanal und somit auch die Kornaufnahme in dem Kornaufnahmebereich durch die Steuerung der Zusatzluftströmung in dem Zusatzluftkanal beeinflusst werden. Beispielsweise kann die Förderluftströmung unterbrochen werden, wenn die Durchflusssteuereinrichtung des Zusatzluftkanals vollständig geöffnet wird, sodass der in die eine oder die mehreren Materialströmungsleitungen eingeleitete Luftstrom aufgrund des geringeren Strömungswiderstandes entlang des Zusatzluftströmungspfads durch die Zusatzluftströmung ausgebildet wird. Ein gesteigerter Strömungswiderstand entlang des Strömungspfads der Förderluftströmung kann sich beispielsweise durch körniges Material im Kornaufnahmebereich ergeben. Umgekehrt kann die Menge des aufgenommenen körnigen Materials in direkter Weise durch Abschwächen der Zusatzluftströmung gesteigert werden, da somit die Förderluftströmung innerhalb des Förderluftkanals und damit auch im Kornaufnahmebereich verstärkt wird.

Außerdem ist eine erfindungsgemäße Verteileinrichtung vorteilhaft, bei welcher die eine oder die mehreren Materialströmungsleitungen eine oder mehrere Hauptförderleitungen umfassen, wobei der Kornaufnahmebereich vorzugsweise in einem unteren Bereich des Verteilergehäuses angeordnet ist und die eine oder die mehreren Hauptförderleitungen jeweils aufrecht in dem Verteilergehäuse verlaufen und jeweils dazu eingerichtet sind, eine mit körnigem Material beladene Förderluftströmung von dem Kornaufnahmebereich nach oben zu fördern. Die Materialströmungsleitungen können zwei separate und/oder beabstandet voneinander angeordnete Hauptförderleitungen umfassen. Alternativ kann in einer Hauptförderleitung auch eine Trenneinrichtung angeordnet sein, welche dazu eingerichtet ist, zwei separate Strömungen innerhalb der einen Hauptförderleitung zu erzeugen. Die Trenneinrichtung kann sich bis an den Materialaufnahmebereich heran erstrecken, sodass sich in Strömungsrichtung direkt hinter dem Materialaufnahmebereich zwei separate Strömungen innerhalb der Hauptförderleitung ausbilden. Alternativ erstreckt sich die Trenneinrichtung nicht bis an den Kornaufnahmebereich heran, sodass sich in Strömungsrichtung direkt hinter dem Kornaufnahmebereich zunächst eine Hauptströmung bildet, welche innerhalb der Hauptförderleitung von der Trenneinrichtung dann in zwei separate Strömungen geteilt wird. Durch zwei separate und/oder beabstandet voneinander angeordnete Hauptförderleitungen und/oder zwei separate Strömungen innerhalb einer Hauptförderleitung wird vermieden, dass sich die Materialströmungen gegenseitig negativ beeinflussen, beispielsweise, wenn eine der Materialströmungen zwangsweise unterbunden wird. Beispielsweise kann eine Materialströmung durch das Verschließen einer Hauptförderleitung oder eines Teils einer Hauptförderleitung oder eines nachgeschalteten Leitungsabschnitts mittels einer Verschlusskappe zwangsweise unterbunden werden. Ein entsprechendes Verschließen kann in der Praxis beispielsweise erfolgen, wenn die Sämaschinenkonfiguration eine geringere Anzahl an Materialströmungen benötigt, als die Verteileinrichtung maximal bereitstellen kann.

In einer weiteren bevorzugten Ausführungsform der erfindungsgemäßen Verteileinrichtung befindet sich an der einen Hauptförderleitung oder an jeder der mehreren Hauptförderleitungen zumindest ein Zusatzlufteinlass zum Einleiten der Zusatzluftströmung. Somit wird eine Zusatzluftströmung in die mit körnigem Material beladene Förderluftströmung während des Aufsteigens innerhalb des Verteilergehäuses eingeleitet. Vorzugsweise weist die eine oder weisen die mehreren Hauptförderleitungen jeweils zumindest zwei gegenüberliegende Zusatzlufteinlässe auf, sodass Strömungsverwirbelungen beim Einleiten der Zusatzluft im Wesentlichen vermieden werden.

Außerdem ist eine erfindungsgemäße Verteileinrichtung bevorzugt, bei welcher die eine oder die mehreren Materialströmungsleitungen eine oder mehrere Materialtransportleitungen umfassen, mittels welchen die mit dem körnigen Material beladene Förderluftströmung oder die mit körnigem Material beladenen Förderluftströmungen aus dem Verteilergehäuse herausleitbar sind. Die eine oder die mehreren Materialtransportleitungen schließen sich vorzugsweise an die eine oder die mehreren Hauptförderleitungen an. Vorzugsweise schließen sich zwei Materialtransportleitungen an eine oder an zwei Hauptförderleitungen an.

In einer anderen bevorzugten Ausführungsform der erfindungsgemäßen Verteileinrichtung weist die eine oder weisen die mehreren Materialtransportleitungen jeweils einen Schnellverschluss auf, mittels welchem ein Materialtransportschlauch, insbesondere werkzeuglos, an die jeweilige Materialtransportleitung anschließbar ist. Der Schnellverschluss kann beispielsweise als Bajonett-Verschluss ausgebildet sein. Der Schnellverschluss kann auch ein Clip- und/oder Klemmverschluss sein. Der Schnellverschluss kann ferner auch als Drehverschluss ausgebildet sein.

In einer anderen bevorzugten Ausführungsform der erfindungsgemäßen Verteileinrichtung weist die Verteileinrichtung eine Mehrzahl von nebeneinander angeordneten Verteilmodulen auf, wobei die Verteileinrichtung über weitere Verteilmodule modular erweiterbar ist. Die Verteileinrichtung ist somit je nach Systemgröße skalierbar. Ein Verteilmodul kann beispielsweise aus zwei spiegelbildlichen Modulhälften ausgebildet sein. Insbesondere weisen die Verteilmodule jeweils eine spiegelsymmetrische Außenkontur auf, sodass die jeweiligen Verteilmodule in zwei unterschiedlichen Ausrichtungen verwendet werden können. Über die Ausrichtung eines Verteilmoduls kann die Position der Materialströmungsauslässe festgelegt werden. Je nach Ausrichtung der einzelnen Verteilmodule können die Materialströmungsauslässe auf einer ersten Seite der Verteileinrichtung oder auf einer zweiten gegenüberliegenden Seite der Verteileinrichtung angeordnet sein. Bei einer entsprechenden Ausrichtung der Verteileinrichtung können somit beispielsweise einige Materialströmungsauslässe in Richtung der linken Maschinenhälfte und einige Materialströmungsauslässe in Richtung der rechten Maschinenhälfte ausgerichtet sein.

Ferner ist eine erfindungsgemäße Verteileinrichtung vorteilhaft, bei welcher jedes Verteilmodul zumindest einen mit einem Kornaufnahmebereich verbundenen Förderluftkanal, eine oder mehrere sich an den Kornaufnahmebereich anschließende Materialströmungsleitungen und zumindest einen Abschnitt des Zusatzluftkanals, welcher über zumindest einen Zusatzlufteinlass mit der einen oder den mehreren Materialströmungsleitungen verbunden ist, umfasst. Über die Anzahl der verwendeten Verteilmodule kann somit die Anzahl der mit körnigem Material beladenen Förderluftströmungen, welche die Verteileinrichtung im Betrieb bereitstellt, angepasst werden.

Es ist außerdem eine erfindungsgemäße Verteileinrichtung vorteilhaft, bei welcher die Verteilmodule in einen Gehäuserahmen eingeschoben sind und vorzugsweise zerstörungsfrei aus dem Gehäuserahmen entnehmbar sind. Die einzelnen Verteilmodule und der Gehäuserahmen bilden zusammen eine nahezu fluiddichte Einheit aus. Zum Erweitern der Verteileinrichtung kann eine oder können mehrere zusätzliche Verteilmodule in den Gehäuserahmen eingeschoben werden. Zum Verkleinern der Verteileinrichtung kann eine oder können mehrere Verteilmodule aus dem Gehäuserahmen entnommen werden.

Die der Erfindung zugrundeliegende Aufgabe wird ferner durch eine Sämaschine der eingangs genannten Art gelöst, wobei die Verteileinrichtung der erfindungsgemäßen Sämaschine nach einer der vorstehend beschriebenen Ausführungsformen ausgebildet ist. Hinsichtlich der Vorteile und Modifikationen der erfindungsgemäßen Sämaschine wird zunächst auf die Vorteile und Modifikationen der erfindungsgemäßen Verteileinrichtung verwiesen.

Die Kornvereinzelungseinrichtungen der Sämaschine können pneumatische oder mechanische Kornvereinzelungseinrichtungen sein. Die pneumatischen Kornvereinzelungseinrichtungen sind dazu eingerichtet, Körner aus dem von dem Versorgungsaggregat bereitgestellten körnigem Material pneumatisch zu vereinzeln. Die mechanischen Kornvereinzelungseinrichtungen sind dazu eingerichtet, Körner aus dem von dem Versorgungsaggregat bereitgestellten körnigem Material mechanisch zu vereinzeln.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel der erfindungsgemäßen Verteileinrichtung in einer perspektivischen Darstellung;
- Fig. 2: die in der Fig. 1 gezeigte Verteileinrichtung in einer weiteren perspektivischen Darstellung;
- Fig. 3: die in der Fig. 1 gezeigte Verteileinrichtung in einer Schnittdarstellung;
- Fig. 4: die in der Fig. 1 gezeigte Verteileinrichtung in einer weiteren Schnittdarstellung;
- Fig. 5: ein Verteilmodul einer erfindungsgemäßen Verteileinrichtung in einer Seitenansicht;
- Fig. 6: ein Verteilmodul einer erfindungsgemäßen Verteileinrichtung in einer Seitenansicht;
- Fig. 7: ein Verteilmodul einer erfindungsgemäßen Verteileinrichtung in einer Seitenansicht;
- Fig. 8: ein Verteilmodul einer erfindungsgemäßen Verteileinrichtung in einer Seitenansicht;
- Fig. 9: ein Verteilmodul einer erfindungsgemäßen Verteileinrichtung in einer perspektivischen Darstellung; und
- Fig. 10: mehrere Verteilmodule einer erfindungsgemäßen Verteileinrichtung in einer perspektivischen Darstellung.

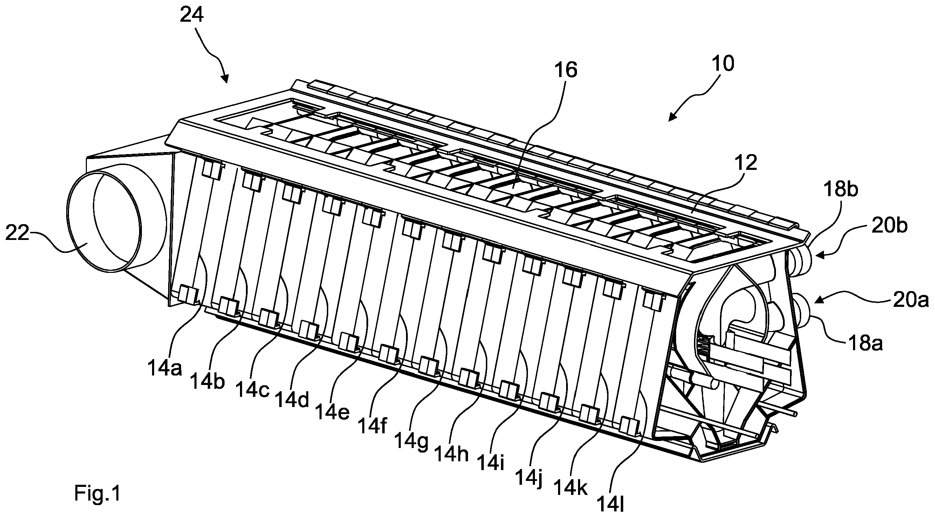

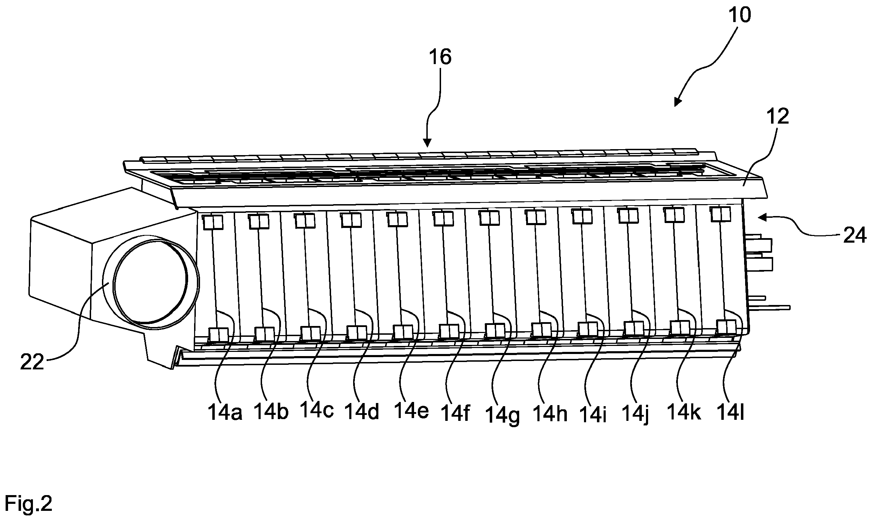

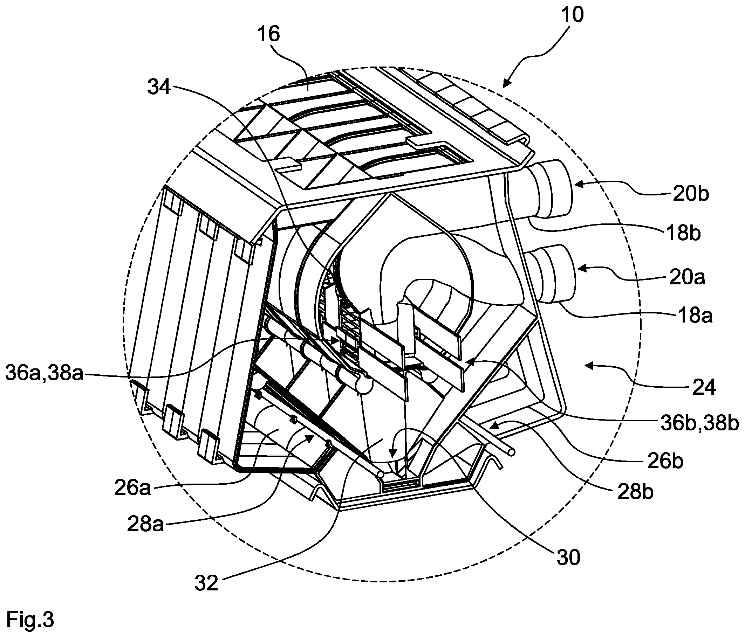

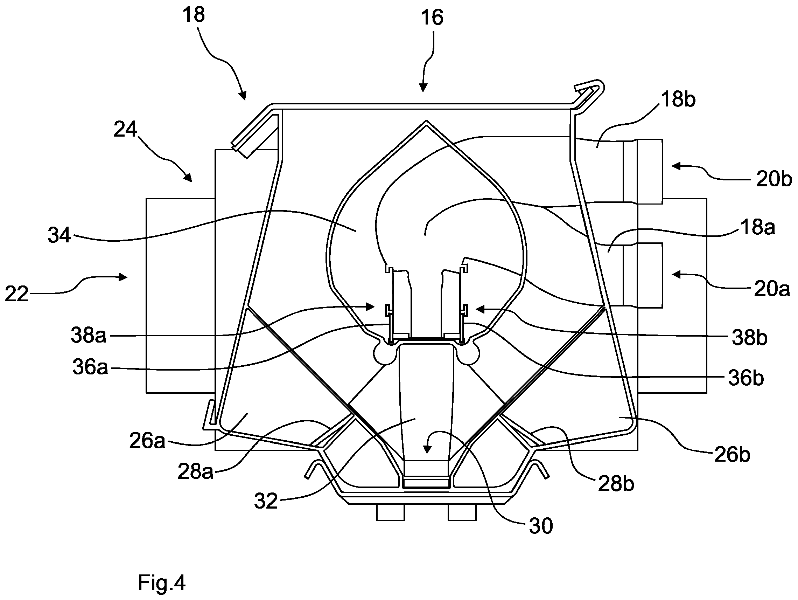

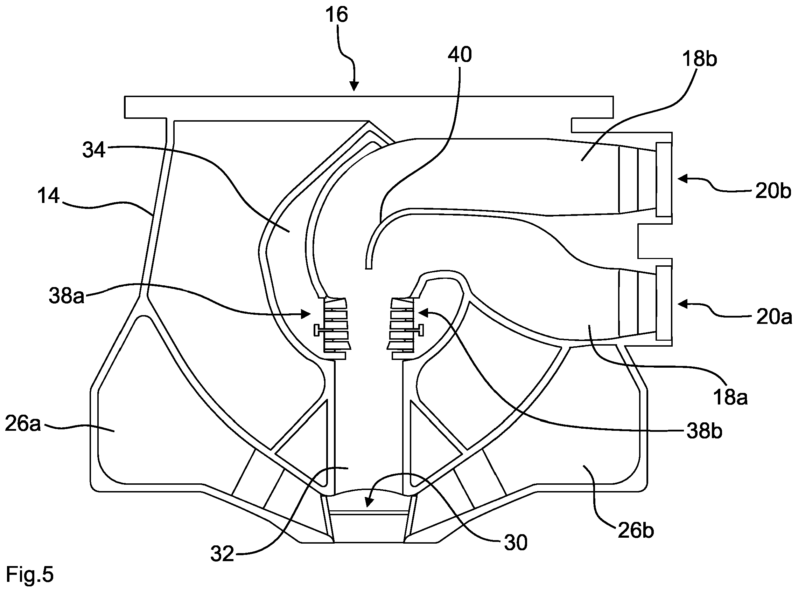

Die Fig. 1 bis 4 zeigen eine Verteileinrichtung 10 für Saatgut einer landwirtschaftlichen Sämaschine. Die Verteileinrichtung 10 weist mehrere nebeneinander angeordnete Verteilmodule 14a-14l auf, welche in einen Gehäuserahmen 12 eingeschoben sind. Die Verteilmodule 14a-14l sind zerstörungsfrei in den Gehäuserahmen 12 einsetzbar und zerstörungsfrei aus dem Gehäuserahmen 12 entnehmbar. Aufgrund des modularen Aufbaus der Verteileinrichtung 10 ist diese modular skalierbar ausgebildet und kann somit an unterschiedliche Systemgrößen angepasst werden. Mögliche Ausgestaltungen der Verteilmodule 14a-14l werden mit Bezug auf die Fig. 5 bis 9 später erläutert.

Die Verteileinrichtung 10 umfasst ein Verteilergehäuse 24, welches eine Materialeinlassöffnung 16 für das Saatgut aufweist. Die Verteileinrichtung 10 ist unterhalb eines Saatgut-Vorratsbehälters der Sämaschine anzuordnen, sodass die Verteileinrichtung 10 als Verteilerschleuse zwischen dem Saatgut-Vorratsbehälter und den Kornvereinzelungseinrichtungen der Sämaschine fungieren kann. Das Saatgut fällt unter Schwerkrafteinwirkung durch die Materialeinlassöffnung 16 in das Verteilergehäuse 24.

Das Verteilergehäuse 24 weist ferner eine Hauptlufteinlassöffnung 22 auf, über welche eine Luftströmung in das Verteilergehäuse 24 einleitbar ist. Innerhalb des Verteilergehäuses 24 ist eine Strömungsteilungseinrichtung angeordnet, welche die in das Verteilergehäuse 24 eingeleitete Luftströmung in materialfreie Förderluftströmungen und eine materialfreie Zusatzluftströmung aufteilt. Innerhalb des Verteilergehäuses 24 werden somit separate materialfreie Luftströmungen erzeugt. Die Strömungsteilungseinrichtung kann beispielsweise eine oder mehrere Luftablenkflächen aufweisen, welche innerhalb des Strömungspfads der über die Hauptlufteinlassöffnung 22 in das Verteilergehäuse 24 eingeleiteten Luftströmung positioniert sind. Aufgrund der gemeinsamen Hauptlufteinlassöffnung 22 können die Förderluftströmungen und die Zusatzluftströmung über das gleiche Gebläse erzeugt werden. In einer nicht gezeigten Ausführungsform weist das Verteilergehäuse 24 zwei Hauptlufteinlassöffnungen 22 auf einander gegenüberliegenden Seiten auf.

Innerhalb des Verteilergehäuses 24 sind mehrere Förderluftkanäle 26a, 26b zum Führen der materialfreien Förderluftströmungen angeordnet. Innerhalb der Förderluftkanäle 26a, 26b sind Durchflusssteuereinrichtungen 28a, 28b angeordnet, mittels welchen die materialfreien Förderluftströmungen einstellbar sind. Die Durchflusssteuereinrichtungen 28a, 28b in den Förderluftkanälen 26a, 26b umfassen jeweils einen Klappenmechanismus, welcher eine schwenkbare Luftdosierklappe aufweist. Durch eine Änderung der Drehwinkelstellung der Luftdosierklappen können die Förderluftströmungen eingestellt werden. Die Luftdosierklappen sind mit einer Klappen-Welle verbunden, wobei die Drehwinkelstellungen der Luftdosierklappen durch Drehen der Klappen-Wellen einstellbar sind. Die Durchflusssteuerung erfolgt somit durch eine Veränderung des Strömungsquerschnitts innerhalb der Förderluftkanäle 26a, 26b.

Die Förderluftkanäle 26a, 26b sind innerhalb des Verteilergehäuses 24 mit einem Kornaufnahmebereich 30 verbunden. Innerhalb des Kornaufnahmebereichs 30 wird das über die Materialeinlassöffnung 16 in das Verteilergehäuse 24 eintretende Saatgut in die materialfreien Förderluftströmungen eingebracht. An den Kornaufnahmebereich 30 schließen sich Materialströmungsleitungen 32, 18a, 18b für die mit dem Saatgut beladenen Förderluftströmungen an. Über die Materialströmungsleitungen 32, 18a, 18b sind die mit dem Saatgut beladenen Luftströmungen aus dem Verteilergehäuse 24 herausleitbar. Die mit dem Saatgut beladenen Luftströmungen können dann über die Materialströmungsauslässe 20a, 20b die Verteileinrichtung 10 verlassen.

Die Materialströmungsleitungen 32, 18a, 18b umfassen pro Verteilmodul 14a-14l eine Hauptförderleitung 32. Der in dem unteren Bereich des Verteilergehäuses 24 angeordnete Kornaufnahmebereich 30 ist unterhalb der jeweiligen Hauptförderleitungen 32 angeordnet. Die Hauptförderleitungen 32 stehen aufrecht in dem Verteilergehäuse 24 und dienen zum Fördern der mit Saatgut beladenen Förderluftströmungen von dem Kornaufnahmebereich 30 nach oben.

Innerhalb des Verteilergehäuses 24 ist ferner ein Zusatzluftkanal 34 für die materialfreie Zusatzluftströmung angeordnet. Die materialfreie Zusatzluftströmung wird über Zusatzlufteinlässe 38a, 38b in die Hauptförderleitungen 32 eingeleitet. Mittels der Zusatzluftströmungen können die Hauptförderleitungen 32 mit zusätzlicher Luft versorgt werden, sodass die Strömungsgeschwindigkeit und das Saatgut beschleunigt wird. Auf diese Weise wird eine Ablagerung des körnigen Materials oder sogar ein Verstopfen der Materialströmungsleitungen 32, 18a, 18b vermieden. Mittels der Zusatzluftströmungen können die Materialströmungsleitungen 32, 18a, 18b außerdem frei von am Saatgut anhaftenden Rückständen gehalten werden.

An den Zusatzlufteinlässen 38a, 38b sind Durchflusssteuereinrichtungen 36a, 36b angeordnet, mittels welchen die Zusatzluftströmungen einstellbar sind. Die Durchflusssteuereinrichtungen 36a, 36b an den Zusatzlufteinlässen 38a, 38b umfassen jeweils einen Schiebermechanismus, welcher einen stufenlos verschiebbaren Luftdosierschieber aufweist. Durch die Änderung der Position der Luftdosierschieber können die Zusatzlufteinlässe 38a, 38b teilweise oder vollständig abgedeckt werden, sodass hierdurch die Zusatzluftströmungen eingestellt werden können. Die Einstellung der Zusatzluftströmungen erfolgt somit über ein Verändern des freien Strömungsquerschnitts im Bereich der Zusatzlufteinlässe 38a, 38b.

Die Hauptförderleitungen 32 werden in Strömungsrichtung hinter den Zusatzlufteinlässen 38a, 38b jeweils auf zwei Materialtransportleitungen 18a, 18b aufgeteilt. Mittels der Materialtransportleitungen 18a, 18b können die mit Saatgut beladenen Förderluftströmungen aus dem Verteilergehäuse 24 herausgeleitet werden. Die Materialtransportleitungen 18a, 18b können jeweils einen Schnellverschluss aufweisen, an welchem jeweils ein Materialtransportschlauch werkzeuglos anschließbar ist. Die Schnellverschlüsse können beispielsweise Bajonett-Verschlüsse sein.

Die Verteileinrichtung 10 kann beispielsweise mit mehreren Versorgungsaggregaten der Sämaschine verbunden sein, welche jeweils dazu eingerichtet sind, das Saatgut aus den mit Saatgut beladenen Förderluftströmungen zu sammeln und Kornvereinzelungseinrichtungen bereitzustellen. Die mit den Versorgungsaggregaten verbundenen Kornvereinzelungseinrichtungen vereinzeln dann die Körner des Saatguts und stellen die vereinzelten Körner Säscharen bereit, wobei die Säschare die vereinzelten Körner auf eine landwirtschaftliche Nutzfläche ablegen.

Die Kornvereinzelungseinrichtungen können dabei pneumatische oder mechanische Kornvereinzelungseinrichtungen sein.

Die Fig. 5 bis 7 zeigen jeweils ein Verteilmodul 14 einer Verteileinrichtung 10. Die Verteilmodule 14 bilden jeweils einen Abschnitt der Materialeinlassöffnung 16 der Verteileinrichtung 10 aus, über welches Saatgut in das Verteilergehäuse 24 der Verteileinrichtung 10 gelangen kann. Ferner weisen die jeweiligen Verteilmodule 14 einen Kornaufnahmebereich 30 auf, wobei der Kornaufnahmebereich 30 jeweils mit zwei Förderluftkanälen 26a, 26b verbunden ist. Bei den jeweiligen Verteilmodulen 14 schließt sich an den Kornaufnahmebereich 30 eine Hauptförderleitung 32 an, über welche eine mit Saatgut beladene Förderluftströmung nach oben in Richtung der Materialtransportleitungen 18a, 18b geleitet wird.

Die jeweiligen Verteilmodule 14 bilden jeweils auch einen Abschnitt eines Zusatzluftkanals 34 auf, welcher über zwei gegenüberliegende Zusatzlufteinlässe 38a, 38b mit der Hauptförderleitung 32 verbunden ist.

In den Hauptförderleitungen 32 der dargestellten Verteilmodule 14 ist jeweils eine Trenneinrichtung 40 angeordnet, welche dazu eingerichtet ist, zwei separate Strömungen innerhalb der Hauptförderleitung 32 zu erzeugen.

Bei der in der Fig. 5 dargestellten Ausführungsform ist die Trenneinrichtung 14 in Strömungsrichtung hinter den Zusatzlufteinlässen 38a, 38b angeordnet, sodass zwei separate Strömungen erst unmittelbar vor den Materialtransportleitungen 18a, 18b erzeugt werden.

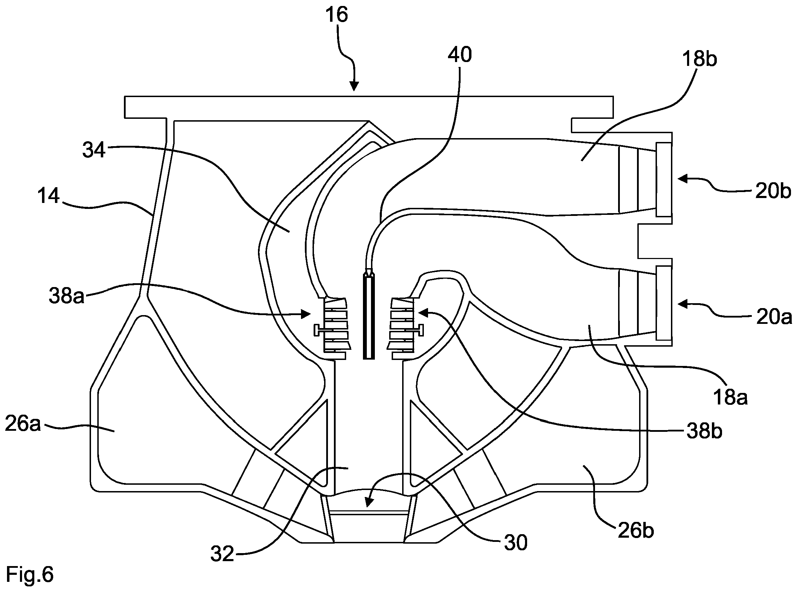

In der Fig. 6 erstreckt sich die Trenneinrichtung 40 über den Bereich der Zusatzlufteinlässe 38a, 38b, jedoch nicht bis an den Kornaufnahmebereich 30 heran. In Strömungsrichtung hinter dem Kornaufnahmebereich 30 bildet sich somit zunächst eine einzelne mit Saatgut beladene Förderluftströmung aus, welche jedoch vor dem Einleitebereich der Zusatzluftströmung von der Trenneinrichtung 40 in zwei separate Strömungen aufgeteilt wird.

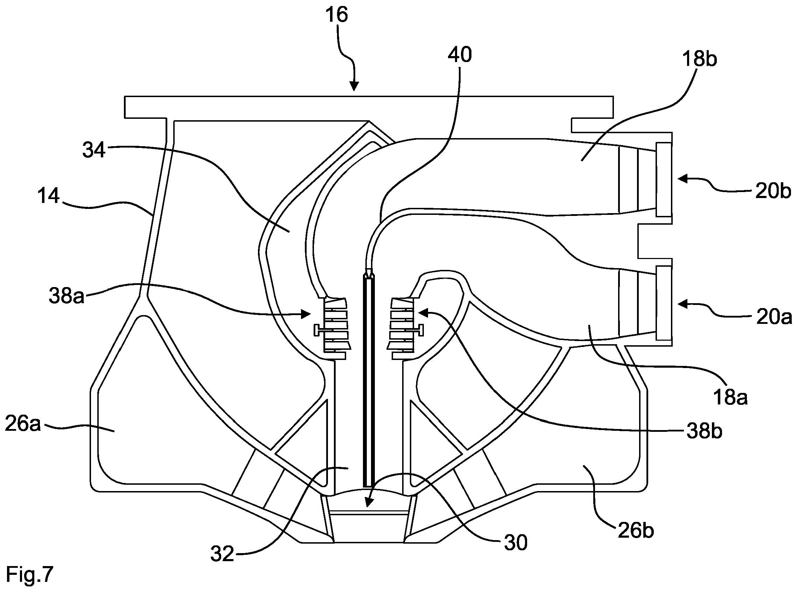

Bei der in der Fig. 7 dargestellten Ausführungsform erstreckt sich die Trenneinrichtung 40 bis an den Kornaufnahmebereich 30 heran, sodass sich in Strömungsrichtung direkt hinter dem Kornaufnahmebereich 30 zwei separate Strömungen innerhalb der Hauptförderleitung 32 ausbilden.

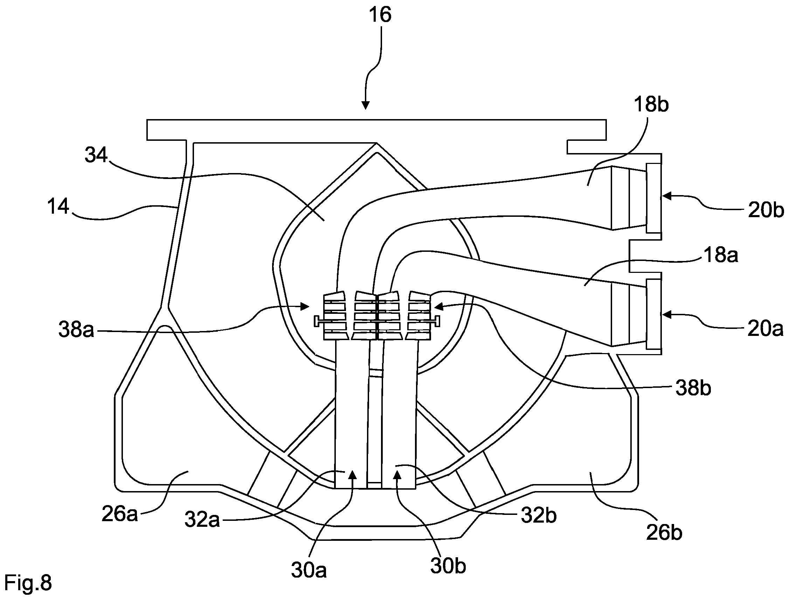

Die Fig. 8 zeigt ein Verteilmodul 14, welches zwei nebeneinander und beabstandet voneinander angeordnete Hauptförderleitungen 32a, 32b aufweist, welche sich direkt an die sich im unteren Bereich des Verteilmoduls 14 befindlichen Kornaufnahmebereiche 30a, 30b anschließen. Die beiden Hauptförderleitungen 32a, 32b gehen in Strömungsrichtung hinter den Zusatzlufteinlässen 38a, 38b in Materialtransportleitungen 18a, 18b über, über welche die mit Saatgut beladenen Förderluftströmungen aus dem Verteilmodul 14 herausgeleitet werden.

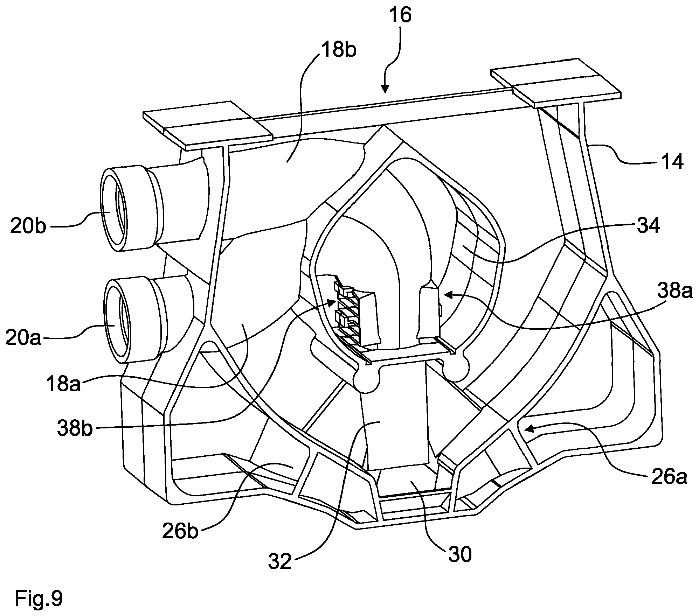

Die Fig. 9 zeigt ein Verteilmodul 14 einer Verteileinrichtung 10. Das Verteilmodul 14 ist aus zwei spiegelbildlichen Hälften ausgebildet. Ferner weist das Verteilmodul 14 eine spiegelsymmetrische Außenkontur auf, sodass die Materialströmungsauslässe 20a, 20b abhängig von der Ausrichtung des Verteilmoduls entweder auf einer ersten Seite der Verteileinrichtung 10 oder auf einer zweiten gegenüberliegenden Seite der Verteileinrichtung 10 angeordnet sein können.

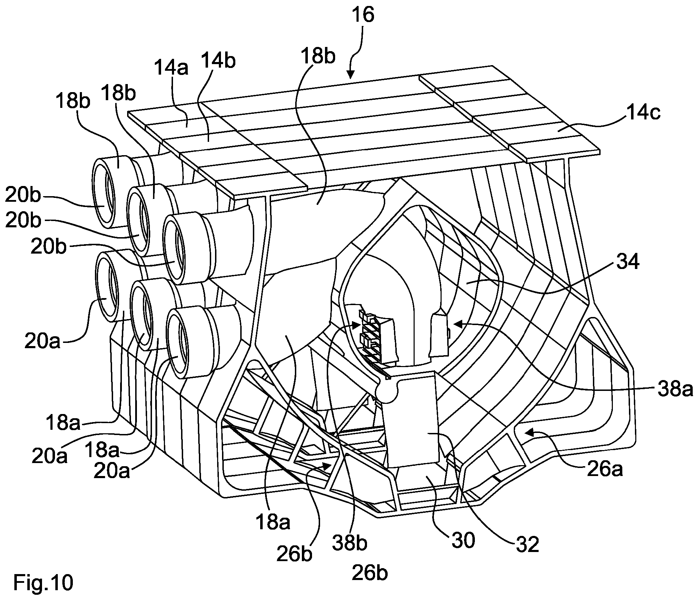

Die Fig. 10 zeigt mehrere nebeneinander angeordnete Verteilmodule 14a-14c, welche in einen Gehäuserahmen 12 einer Verteileinrichtung 10 einsetzbar sind. Über die Anzahl der verwendeten Verteilmodule kann die Anzahl der zur Verfügung stehenden Materialströmungsauslässe 20a, 20b festgelegt werden.

Somit ist die Verteileinrichtung 10 modular erweiterbar ausgebildet und lässt sich somit an die Systemgröße der Sämaschine anpassen.

### Bezugszeichenliste

- 10: Verteileinrichtung
- 12: Gehäuserahmen
- 14, 14a-14l: Verteilmodule
- 16: Materialeinlassöffnung
- 18a, 18b: Materialströmungsleitungen
- 20a, 20b: Materialströmungsauslässe
- 22: Hauptlufteinlassöffnung
- 24: Verteilergehäuse
- 26a, 26b: Förderluftkanäle
- 28a, 28b: Durchflusssteuereinrichtungen
- 30, 30a, 30b: Kornaufnahmebereiche
- 32, 32a, 32b: Materialströmungsleitungen
- 34: Zusatzluftkanal
- 36a, 36b: Durchflusssteuereinrichtungen
- 38a, 38b: Zusatzlufteinlässe
- 40: Trenneinrichtung

## Patentansprüche

1. Verteileinrichtung (10) für körniges Material, insbesondere Saatgut, mit
- einem Verteilergehäuse (24), welches eine Materialeinlassöffnung (16) für das körnige Material aufweist,
- zumindest einem in dem Verteilergehäuse (24) angeordneten Förderluftkanal (26a, 26b) für eine materialfreie Förderluftströmung, wobei der Förderluftkanal (26a, 26b) mit einem Kornaufnahmebereich (30, 30a, 30b) innerhalb des Verteilergehäuses (24) verbunden ist, innerhalb welchem das über die Materialeinlassöffnung (16) in das Verteilergehäuse (24) eintretende körnige Material in die materialfreie Förderluftströmung einbringbar ist, und
- eine oder mehrere sich an den Kornaufnahmebereich (30, 30a, 30b) anschließende Materialströmungsleitungen (18a, 18b, 32, 32a, 32b) für die mit körnigem Material beladene Förderluftströmung;
wobei zumindest ein Zusatzluftkanal (34) für eine materialfreie Zusatzluftströmung, welche über zumindest einen Zusatzlufteinlass (38a, 38b) in die eine oder die mehreren Materialströmungsleitungen (18a, 18b, 32, 32a, 32b) einleitbar ist, in dem Verteilergehäuse (24) angeordnet ist,
**dadurch gekennzeichnet, dass** in dem zumindest einen Zusatzluftkanal (34) und/oder an dem zumindest einen Zusatzlufteinlass (38a, 38b) eine Durchflusssteuereinrichtung (36a, 36b) angeordnet ist, mittels welcher die Zusatzluftströmung einstellbar ist.

2. Verteileinrichtung (10) nach Anspruch 1,
**dadurch gekennzeichnet, dass** das Verteilergehäuse (24) zumindest eine Hauptlufteinlassöffnung (22) aufweist, über welche eine Luftströmung in das Verteilergehäuse (24) einleitbar ist, wobei innerhalb des Verteilergehäuses (24) vorzugsweise eine Strömungsteilungseinrichtung angeordnet ist, welche dazu eingerichtet ist, die in das Verteilergehäuse (24) eingeleitete Luftströmung in die Förderluftströmung und die Zusatzluftströmung aufzuteilen.

3. Verteileinrichtung (10) nach Anspruch 1 oder 2,
**dadurch gekennzeichnet, dass** in dem zumindest einen Förderluftkanal (26a, 26b) eine Durchflusssteuereinrichtung (28a, 28b) angeordnet ist, mittels welcher die Förderluftströmung einstellbar ist.

4. Verteileinrichtung (10) nach einem der vorstehenden Ansprüche,
**dadurch gekennzeichnet, dass** die eine oder die mehreren Materialströmungsleitungen (18a, 18b, 32, 32a, 32b) eine oder mehrere Hauptförderleitungen (32, 32a, 32b) umfassen, wobei der Kornaufnahmebereich (30, 30a, 30b) vorzugsweise in einem unteren Bereich des Verteilergehäuses (24) angeordnet ist und die eine oder die mehreren Hauptförderleitungen (32, 32a, 32b) jeweils aufrecht in dem Verteilergehäuse (24) verlaufen und jeweils dazu eingerichtet sind, eine mit körnigem Material beladene Förderluftströmung von dem Kornaufnahmebereich (30, 30a, 30b) nach oben zu fördern.

5. Verteileinrichtung (10) nach Anspruch 4,
**dadurch gekennzeichnet, dass** sich an der einen Hauptförderleitung (32) oder an jeder der mehreren Hauptförderleitungen (32a, 32b) zumindest ein Zusatzlufteinlass (38a, 38b) zum Einleiten der Zusatzluftströmung befindet.

6. Verteileinrichtung (10) nach einem der vorstehenden Ansprüche,
**dadurch gekennzeichnet, dass** die eine oder die mehreren Materialströmungsleitungen (18a, 18b, 32, 32a, 32b) eine oder mehrere Materialtransportleitungen (18a, 18b) umfassen, mittels welchen die mit körnigem Material beladene Förderluftströmung oder die mit körnigem Material beladenen Förderluftströmungen aus dem Verteilergehäuse (24) herausleitbar sind.

7. Verteileinrichtung (10) nach Anspruch 6,
**dadurch gekennzeichnet, dass** die eine oder die mehreren Materialtransportleitungen (18a, 18b) jeweils einen Schnellverschluss aufweisen, mittels welchem ein Materialtransportschlauch, insbesondere werkzeuglos, an die jeweilige Materialtransportleitung (18a, 18b) anschließbar ist.

8. Verteileinrichtung (10) nach einem der vorstehenden Ansprüche,
**dadurch gekennzeichnet, dass** die Verteileinrichtung (10) eine Mehrzahl von nebeneinander angeordneten Verteilmodulen (14, 14a-14l) aufweist, wobei die Verteileinrichtung (10) über weitere Verteilmodule (14, 14a-14l) modular erweiterbar ist.

9. Verteileinrichtung (10) nach Anspruch 8,
**dadurch gekennzeichnet, dass** jedes Verteilmodul (14, 14a-14l) zumindest einen mit einem Kornaufnahmebereich (30, 30a, 30b) verbundenen Förderluftkanal (26a, 26b), eine oder mehrere sich an den Kornaufnahmebereich (30, 30a, 30b) anschließende Materialströmungsleitungen (18a, 18b, 32, 32a, 32b) und zumindest einen Abschnitt des Zusatzluftkanals (34), welcher über zumindest einen Zusatzlufteinlass (38a, 38b) mit der einen oder den mehreren Materialströmungsleitungen (18a, 18b, 32, 32a, 32b) verbunden ist, umfasst.

10. Verteileinrichtung (10) nach Anspruch 8 oder 9,
**dadurch gekennzeichnet, dass** die Verteilmodule (14, 14a-14l) in einen Gehäuserahmen (12) eingeschoben sind und vorzugsweise zerstörungsfrei aus dem Gehäuserahmen (12) entnehmbar sind.

11. Sämaschine, mit
- einem Vorratsbehälter für körniges Material,
- einer Verteileinrichtung (10), welche dazu eingerichtet ist, das körnige Material aus dem Vorratsbehälter in mehrere Förderluftströmungen einzubringen;
- mehreren Versorgungsaggregaten, welche jeweils dazu eingerichtet sind, das körnige Material aus einer mit körnigem Material beladenen Förderluftströmung zu sammeln und einer Kornvereinzelungseinrichtung bereitzustellen;
- mehreren Kornvereinzelungseinrichtungen, welche jeweils mit einem Versorgungsaggregat verbunden und dazu eingerichtet sind, Körner aus dem von dem Versorgungsaggregat bereitgestellten körnigen Material zu vereinzeln; und
- mehreren Säscharen zum Ablegen von vereinzelten Körnern auf eine landwirtschaftliche Nutzfläche;
**dadurch gekennzeichnet, dass** die Verteileinrichtung (10) nach einem der vorstehenden Ansprüche ausgebildet ist.

## Claims

1. Distribution device (10) for granular material, in particular seed, comprising
- a distributor housing (24) having a material inlet opening (16) for the granular material,
- at least one conveying air duct (26a, 26b) arranged in the distributor housing (24) for a material-free conveying air flow, the conveying air duct (26a, 26b) being connected to a grain receiving region (30, 30a, 30b) within the distributor housing (24), within which region the granular material entering the distributor housing (24) via the material inlet opening (16) can be introduced into the material-free conveying air flow, and
- one or more material flow lines (18a, 18b, 32, 32a, 32b) for the conveying air flow loaded with granular material, which material flow lines adjoin the grain receiving region (30, 30a, 30b);
at least one additional air duct (34) for a material-free additional air flow being arranged in the distributor housing (24), which additional air flow can be introduced into the one or more material flow lines (18a, 18b, 32, 32a, 32b) via at least one additional air inlet (38a, 38b),
**characterized in that,** in the at least one additional air duct (34) and/or at the at least one additional air inlet (38a, 38b), a flow control device (36a, 36b) is arranged, by means of which the additional air flow can be adjusted.

2. Distribution device (10) according to claim 1,
**characterized in that** the distributor housing (24) comprises at least one main air inlet opening (22) via which an air flow can be introduced into the distributor housing (24), a flow dividing device preferably being arranged within the distributor housing (24), which device is designed to divide the air flow introduced into the distributor housing (24) into the conveying air flow and the additional air flow.

3. Distribution device (10) according to claim 1 or 2,
**characterized in that** a flow control device (28a, 28b) is arranged in the at least one conveying air channel (26a, 26b), by means of which device the conveying air flow can be adjusted.

4. Distribution device (10) according to any of the preceding claims,
**characterized in that** the one or more material flow lines (18a, 18b, 32, 32a, 32b) comprise one or more main conveying lines (32, 32a, 32b), the grain receiving region (30, 30a, 30b) preferably being arranged in a lower region of the distributor housing (24) and the one or more main conveying lines (32, 32a, 32b) each running vertically in the distributor housing (24) and each being designed to convey a conveying air flow loaded with granular material upward from the grain receiving region (30, 30a, 30b).

5. Distribution device (10) according to claim 4,
**characterized in that** at least one additional air inlet (38a, 38b) for introducing the additional air flow is located on the one main conveying line (32) or on each of the plurality of main conveying lines (32a, 32b).

6. Distribution device (10) according to any of the preceding claims,
**characterized in that** the one or more material flow lines (18a, 18b, 32, 32a, 32b) comprise one or more material transport lines (18a, 18b) by means of which the conveying air flow or the conveying air flows loaded with granular material can be led out of the distributor housing (24).

7. Distribution device (10) according to claim 6,
**characterized in that** the one or more material transport lines (18a, 18b) each have a quick-release fastener by means of which a material transport hose can be connected to the relevant material transport line (18a, 18b), in particular without using tools.

8. Distribution device (10) according to any of the preceding claims,
**characterized in that** the distribution device (10) comprises a plurality of distribution modules (14, 14a-14l) arranged next to one another, it being possible to modularly expand the distribution device (10) via further distribution modules (14, 14a-14l).

9. Distribution device (10) according to claim 8,
**characterized in that** each distribution module (14, 14a-14l) comprises at least one conveying air duct (26a, 26b) connected to a grain receiving region (30, 30a, 30b), one or more material flow lines (18a, 18b, 32, 32a, 32b) adjoining the grain receiving region (30, 30a, 30b), and at least one portion of the additional air duct (34) which is connected to the one or more material flow lines (18a, 18b, 32, 32a, 32b) via at least one additional air inlet (38a, 38b).

10. Distribution device (10) according to claim 8 or 9,
**characterized in that** the distribution modules (14, 14a-14l) are inserted into a housing frame (12) and can preferably be removed from the housing frame (12), preferably without causing any damage.

11. Seed drill comprising
- a storage container for granular material;
- a distribution device (10) which is designed to introduce the granular material from the storage container into a plurality of conveying air flows;
- a plurality of supply units, each of which is designed to collect the granular material from a conveying air flow loaded with granular material and to provide it to a grain separating device;
- a plurality of grain separating devices, each connected to a supply unit and configured to separate grains from the granular material provided by the supply unit; and
- a plurality of sowing coulters for depositing separated grains on an agricultural area,
**characterized in that** the distribution device (10) is designed according to any of the preceding claims.

## Revendications

1. Dispositif de distribution (10) de matériau granulaire, en particulier de semences, comportant
- un boîtier de distribution (24) qui présente une ouverture d'entrée de matériau (16) pour le matériau granulaire,
- au moins un canal d'air de transport (26a, 26b) disposé dans le boîtier de distribution (24) pour un écoulement d'air de transport sans matériau, dans lequel le canal d'air de transport (26a, 26b) est relié à une zone de réception de grains (30, 30a, 30b) à l'intérieur du boîtier de distribution (24), zone de réception de grains à l'intérieur de laquelle le matériau granulaire pénétrant dans le boîtier de distribution (24) par l'intermédiaire de l'ouverture d'entrée de matériau (16) peut être introduit dans l'écoulement d'air de transport sans matériau, et
- une ou plusieurs conduites d'écoulement de matériau (18a, 18b, 32, 32a, 32b) se raccordant à la zone de réception de grains (30, 30a, 30b) pour l'écoulement d'air de transport chargé de matériau granulaire ;
dans lequel au moins un canal d'air supplémentaire (34) pour un écoulement d'air supplémentaire sans matériau, lequel canal d'air supplémentaire peut être introduit dans l'une ou les nombreuses conduites d'écoulement de matériau (18a, 18b, 32, 32a, 32b) par l'intermédiaire d'au moins une entrée d'air supplémentaire (38a, 38b), est disposé dans le boîtier de distribution (24),
**caractérisé en ce qu'**un dispositif de commande de débit (36a, 36b), à l'aide duquel l'écoulement d'air supplémentaire est réglable, est disposé dans l'au moins un canal d'air supplémentaire (34) et/ou au niveau de l'au moins une entrée d'air supplémentaire (38a, 38b).

2. Dispositif de distribution (10) selon la revendication 1,
**caractérisé en ce que** le boîtier de distribution (24) présente au moins une ouverture d'entrée d'air principale (22) par l'intermédiaire de laquelle un écoulement d'air peut être introduit dans le boîtier de distribution (24), dans lequel un dispositif de séparation d'écoulement est de préférence disposé à l'intérieur du boîtier de distribution (24), lequel dispositif de séparation d'écoulement est conçu pour séparer l'écoulement d'air introduit dans le boîtier de distribution (24) en écoulement d'air de transport et écoulement d'air supplémentaire.

3. Dispositif de distribution (10) selon la revendication 1 ou 2,
**caractérisé en ce qu'**un dispositif de commande de débit (28a, 28b), à l'aide duquel l'écoulement d'air de transport peut être réglé, est disposé dans l'au moins un canal d'air de transport (26a, 26b).

4. Dispositif de distribution (10) selon l'une des revendications précédentes,
**caractérisé en ce que** la conduite ou les nombreuses conduites d'écoulement de matériau (18a, 18b, 32, 32a, 32b) comprennent une ou plusieurs conduites de transport principales (32, 32a, 32b), dans lequel la zone de réception de grains (30, 30a, 30b) est de préférence située dans une zone inférieure du boîtier de distribution (24) et la conduite ou les nombreuses conduites de transport principales (32, 32a, 32b) sont disposées de manière à être respectivement verticales dans le boîtier de distribution (24) et sont respectivement conçues pour transporter un écoulement d'air de transport chargé de matériau granulaire vers le haut depuis la zone de réception de grains (30, 30a, 30b).

5. Dispositif de distribution (10) selon la revendication 4,
**caractérisé en ce qu'**au moins une entrée d'air supplémentaire (38a, 38b) permettant l'introduction de l'écoulement d'air supplémentaire est située sur ladite une conduite de transport principale (32) ou sur chacune des nombreuses conduites de transport principales (32a, 32b).

6. Dispositif de distribution (10) selon l'une des revendications précédentes,
**caractérisé en ce que** la conduite ou les nombreuses conduites d'écoulement de matériau (18a, 18b, 32, 32a, 32b) comprennent une ou plusieurs conduites de transport de matériau (18a, 18b) à l'aide desquelles l'écoulement ou les écoulements d'air de transport chargés de matériau granulaire peuvent être dirigés hors du boîtier de distribution (24).

7. Dispositif de distribution (10) selon la revendication 6,
**caractérisé en ce que** la conduite ou les nombreuses conduites de transport de matériau (18a, 18b) présentent respectivement une fermeture rapide à l'aide de laquelle un tuyau de transport de matériau peut être raccordé, en particulier sans outil, à la conduite de transport de matériau (18a, 18b) respective.

8. Dispositif de distribution (10) selon l'une des revendications précédentes,
**caractérisé en ce que** le dispositif de distribution (10) présente une pluralité de modules de distribution (14, 14a-14l) disposés les uns à côté des autres, dans lequel le dispositif de distribution (10) peut être étendu de manière modulaire par l'intermédiaire d'autres modules de distribution (14, 14a-14l).

9. Dispositif de distribution (10) selon la revendication 8,
**caractérisé en ce que** chaque module de distribution (14, 14a-14l) comprend au moins un canal d'air de transport (26a, 26b) relié à une zone de réception de grains (30, 30a, 30b), une ou plusieurs conduites d'écoulement de matériau (18a, 18b, 32, 32a, 32b) se raccordant à la zone de réception de grains (30, 30a, 30b), et au moins une section du canal d'air supplémentaire (34), laquelle section est reliée par l'intermédiaire d'au moins une entrée d'air supplémentaire (38a, 38b) à la conduite ou aux nombreuses conduites d'écoulement de matériau (18a, 18b, 32, 32a, 32b).

10. Dispositif de distribution (10) selon la revendication 8 ou 9,
**caractérisé en ce que** les modules de distribution (14, 14a-14l) sont insérés dans un cadre de boîtier (12) et peuvent être retirés du cadre de boîtier (12), de préférence de manière non destructive.

11. Semoir, comportant
- un réservoir pour le matériau granulaire,
- un dispositif de distribution (10) qui est conçu pour introduire le matériau granulaire provenant du réservoir dans plusieurs écoulements d'air de transport ;
- plusieurs unités d'alimentation qui sont respectivement conçues pour collecter le matériau granulaire d'un écoulement d'air de transport chargé de matériau granulaire et le fournir à un dispositif d'individualisation des grains ;
- plusieurs dispositifs d'individualisation des grains, dont chacun est relié à une unité d'alimentation et est conçu pour individualiser les grains provenant du matériau granulaire fourni par l'unité d'alimentation ; et
- plusieurs socs de semoir permettant de déposer des grains individualisés sur une surface utile agricole ;
**caractérisé en ce que** le dispositif de distribution (10) est réalisé selon l'une des revendications précédentes.
